# EUROPEAN PATENT APPLICATION

(11) **EP 3 471 036 A1**
(43) Date of publication of application: **17.04.2019**
(21) Application number: 18000785.8
(22) Date of filing: 02.10.2018
(51) Int. Cl.: G06Q 20/02, G06Q 20/20, G06Q 20/22, G06Q 20/32, G06Q 20/40

(54) **PROCESS FOR FINANCIAL TRANSACTIONS**

(30) Priority: 16.10.2017 NG 24522017
(71) Applicant: PayAttitude Global Ltd, Victoria Island, Lagos (NG)
(72) Inventor: Apochi, Agada, Lagos (NG); Ogunremi, Tolulope, Lagos (NG)
(74) Representative: Ferreira Magno, Fernando Antonio

(57) **Abstract**

The present invention refers to a process for financial transactions based on a unique combination of mobile phone number and push notification for identification, request and authorization of payments comprising: (1) enabling beneficiaries or payees of payments and transfers to seek or initiate payment and transfer of value from the payer or transferor; (2) identifying different types of accounts or value-holding units of the payer or transferor based on the registered telephone numbers of the payer or transferor; and (3) using push notifications to seek and obtain authorisation from the payer or transferor using any of identity of the device and internet connection, without necessarily relying on or going through telephone network operator; or relying on the telephone network operator's Unstructured Supplementary Service Data (USSD).

## Description

The present invention refers to a process for financial transactions that offers convenient ways and means of paying digitally for goods and services based on a unique combination of mobile phone number and push notification for identification, request and authorization of payments, which will revolutionize and enhance commerce and the lifestyle of consumers.

### BACKGROUND

In the fast-paced field of financial technology, there is a sustained drive to create the most convenient method of payment which enables individuals and businesses to digitally exchange value, goods and services efficiently and safely. This invention will be particularly effective in many markets where new financial technologies are emerging around the prevalence of mobile phones. The rise of mobile and internet banking and digital payments is setting the stage for a revolution in payment technology the world over.

The applicant has been in the vanguard of innovation in this space and as a financial technology company and payment scheme, has a rich history of other firsts in enabling the dynamic and sophisticated offline/online contact/contactless payment systems available in Nigeria for distant/remote and proximity payments.

The applicant provides a payment instrument accessible in the form of a mobile app, interactive push notification and USSD (Unstructured Supplementary Service Data) system and NFC (Near Field Communication) tags that enables holders to profile different bank accounts, debit, credit and prepaid accounts or other forms of storage of financial value and use them to conveniently and securely transact business, pay for utilities and bills, transfer money and exchange value.

### DETAILED DESCRIPTION

The present invention is a unique and innovative process for financial transactions that is more secure, comfortable and efficient than any existing art. It enables merchants, payees or other beneficiaries of payments or transfer of value to request payments and transfers from payers or transferors and for the payers or transferors to conveniently authorize or decline such requests in a more convenient and secure process than other similar technologies today.

The uniqueness and distinction of the present invention process are in the combination of telephone numbers and push notifications to:
(i) enable beneficiaries or payees of payments and transfers to seek or initiate payment and transfer of value from the payer or transferor;
(ii) identify different types of accounts or value-holding units of the payer or transferor based on the registered telephone numbers of the payer or transferor; and
(iii) use push notifications to seek and obtain authorization from the payer or transferor using any of:
   a) identity of the device and internet connection, without necessarily relying on or going through telephone network operator; or
   b) relying on the telephone network operator's Unstructured Supplementary Service Data (USSD).

Furthermore, the uniqueness of present invention is to be seen in the following additional functionalities:
i. This invention will replace the physical points of sale terminal. Personal telephone handsets, tablets and similar personal electronic devices will be used for transactions. This will drastically reduce costs of payment infrastructure.
ii. Electronic payment can now be done remotely, and transaction approved in favour of family members, friends, staff, etc. from wherever the account holder may be in the world. This further enhances the ability to carry out payments without the constraints of time, location and personal presence.
iii. Personal identification number (PIN) for transaction authentication will not be entered anywhere else except the subscriber's own device or environment. Unlike what is available today (where the person transacting enters his PIN on a platform outside his control), the subscriber of this solution will enter his PIN on his device. This authorization process guarantees security and makes the PIN less vulnerable to compromise.
iv. Telephone number is a common identifier for all accounts, cards, etc., and replaces card and account details at all acceptance locations and channels.
v. Common and universal solution that converges accounts and payment tokens across different banks, schemes and institutions.

Existing and similar art allows payers and transferors to initiate and make payments and transfer value while the present invention has the unique distinction of enabling payees and beneficiaries to seek or initiate requests for payments and transfer of value and for the payers and transferors to authorize or decline the request.

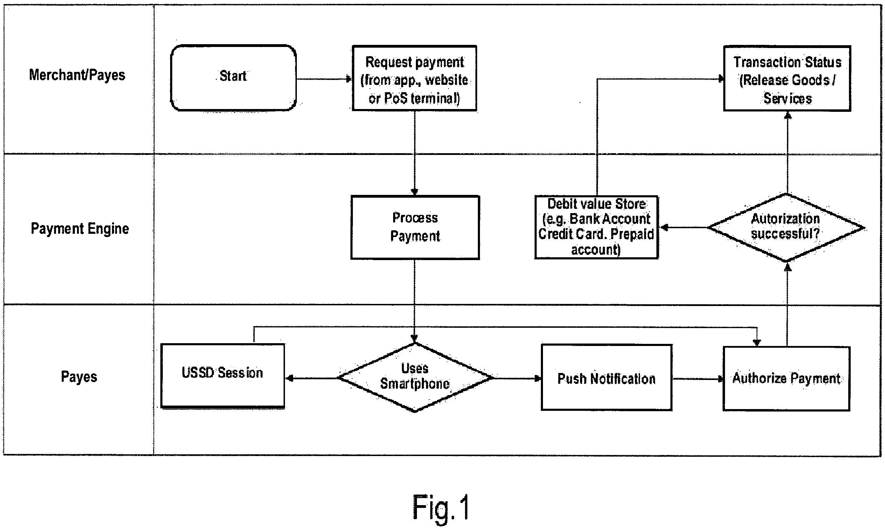

The present invention process is more clearly explained with the help of the diagram and usage scenarios according to Fig. 1.

### USAGE SCENARIOS

### 1. Physical Merchant Location:

The purchaser (which could be the holder or anyone else authorized by the holder e.g. dependent, staff, assistant, family member, friend, beneficiary, etc.) has selected goods or service to purchase
- The cashier demands payment.
- The purchaser elects to pay using a financial service provider for example Pay Attitude.
- The cashier calls up the PayAttitude option on the PoS device or on the Applicant Merchant App (web) interface on the Cashier's computer (previously opened and already signed in as herself under the merchant).
- The cashier asks the purchaser for the holder's phone number, inputs the phone number into the merchant app and presses enter or similar function to push the request to the holder.
- The payment request is transmitted to the PayAttitude payment platform which identifies and locates the holder.
- The holder receives a request on the phone from the PayAttitude payment platform for the holder to authorise the payment.
- The holder opens the payment request or notification on holder's phone and the holder is displayed a page showing the name of the merchant, amount to be paid, the masked number of the holder's unique PayAttitude number which is unique to each account that the holder has linked to holder's PayAttitude.
- The holder enters the unique PIN (personal identification number) of the holder and selects "approve" to authorise the transaction as requested or changes the account to be debited or both before selecting "approve" or selects "Reject" to decline the transaction.
- If transaction is approved by holder, the PayAttitude platform does transaction authentication and validation and debits holder's account.
   - The Cashier receives notification on the physical PoS terminal or the merchant's app (Web) confirming approval of the payment or decline.
   - A. The merchant may receive instant credit in the merchant's bank account or be credited at a later date and time depending on the business arrangement between the merchant and the PayAttitude acquirer or service provider.

Below is a graphic presentation of the sample page presented to the holder, which may vary in look and feel:

| Request for Payment |
|---|
| **Name of Merchant/Payee** |
| 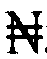 5,000 |
| Change account? |
| 093564******4867 |
| Enter PIN: |
| Reject / Approve |

### 2. Web Merchant/Purchase:

The purchaser (which could be the holder or anyone else authorised by the holder e.g. dependent, staff, assistant, family member, friend, beneficiary, etc.) logs into the merchant's website and shops.
- When ready to checkout, the holder elects to pay with PayAttitude.
- The purchaser is redirected to payment service provider's web gateway which prompts for phone number of holder.
- The purchaser inputs holder's phone number and selects "Pay", "Send" "Push" or any similar option.
- The payment request is transmitted to the PayAttitude payment platform which identifies and locates the holder.
- The holder receives a request on the phone from the PayAttitude payment platform for the holder to authorise the payment.
- The holder opens the payment request or notification on holder's phone and the holder is displayed a page showing the name of the merchant, amount to be paid, the masked number of the holder's unique PayAttitude number which is unique to each account that the holder has linked to holder's PayAttitude.
- The holder enters the unique PIN (personal identification number) of the holder and selects "approve" to authorize the transaction as requested or changes the account to be debited or both before selecting "approve" or selects "Reject" to decline the transaction.
- If transaction is approved by holder, the PayAttitude platform does transaction authentication and validation and debits holder's account.
- The purchaser receives notification on the website confirming approval of the payment or decline.
- The merchant may receive instant credit in the merchant's bank account or be credited at a later date and time depending on the business arrangement between the merchant and the PayAttitude acquirer or service provider.

Below is a graphic presentation of the sample page presented to the holder, which may vary in look and feel:

| Request for Payment |
|---|
| **Name of Merchant/Payee** |
| 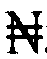 5,000 |
| Change account? |
| 093564******4867 |
| Enter PIN: |
| Reject / Approve |

### 3. Peer to Peer Payment/Transfer

A holder seeks for payment or transfer of funds from another holder.
- Using the mobile app, the requesting holder elects to 'Request Payment/Transfer' from the menu.
- Presented with a screen, the requesting holder types one or more phone numbers or selects one or more contacts from the list of contacts on his/her phone.
- The requesting holder also provides an amount requested and a description or purpose of the request and push, send, or submit.
- The request is transmitted to the PayAttitude payment platform which identifies and locates the holder.
- The holder receives a request on the phone from the PayAttitude payment platform for the holder to authorise the payment.
- The holder opens the payment request or notification on holder's phone and the holder is displayed a page showing the name of the person making request, amount to be paid, the masked number of the holder's unique PayAttitude number which is unique to each account that the holder has linked to holder's PayAttitude.
- The holder enters the unique PIN (personal identification number) of the holder and selects "approve" to authorize the transaction as requested or modifies the amount to be paid or changes the account to be debited or both before selecting "approve" or selects "Reject" to decline the transaction.
- If transaction is approved by holder, the PayAttitude platform does transaction authentication and validation and debits holder's account and credits the account of the person making the request instantly

Below is a graphic presentation of the sample page presented to the holder, which may vary in look and feel:

| Request for Transfer |
|---|
| **Request from ... (Name of Holder/Beneficiary Making the Request)** |
| 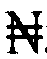 5,000 |
| Change account? |
| 093564******4867 |
| Enter PIN: |
| Reject / Approve |

### 4. ATM Withdrawal:

The holder or anyone authorised by the holder (dependent, staff, assistant, family member, friend, beneficiary, etc.) goes to ATM of participating bank/acquirer and elects to withdraw cash or undertake any other transaction using PayAttitude.
- The ATM presents a screen that enables the withdrawer to enter the holder's phone number and an amount which conforms to the ATM's cash capability, push, send, submit, etc. The withdrawal or payment request is transmitted to the PayAttitude payment platform which identifies and locates the holder.
- The holder receives a request on the phone from the PayAttitude payment platform for the holder to authorise the withdrawal or payment.
- The holder opens the withdrawal or payment request or notification on holder's phone and the holder is displayed a page showing that it is an ATM cash withdrawal or transaction, amount to be paid, the masked number of the holder's unique PayAttitude number which is unique to each account that the holder has linked to holder's PayAttitude.
- The holder enters the unique PIN (personal identification number) of the holder and selects "approve" to authorize the transaction as requested or modifies the amount to be paid or changes the account to be debited or both before selecting "approve" or selects "Reject" to decline the transaction.
- If transaction is approved by holder, the PayAttitude platform does transaction authentication and validation and debits holder's account.
- The withdrawer receives notification on the ATM confirming approval of the payment or decline.
- The cash is dispensed, or service provided by the ATM.
- The ATM owner or Acquirer may receive instant credit in the bank account or be credited at a later date and time depending on the settlement arrangement under PayAttitude.

Below is a graphic presentation of the sample page presented to the holder, which may vary in look and feel:

| Request for Transfer |
|---|
| **ATM Transaction** |
| 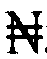 5,000 |
| Change account? |
| 093564******4867 |
| Enter PIN: |
| Reject / Approve |

### CONCLUSION

Major unique values and benefits to mankind and the society include convenience, lifestyle and reduction in the cost of doing electronic business particularly for small and medium scale enterprises in developing economies, who will rely on digital technology to accept and make payments for goods and services at cost effective rates and grow commerce thereby increasing economic growth and prosperity of individuals, businesses and the larger society.

## Claims

1. The process for financial transactions based on a unique combination of mobile phone number and push notification for identification, request and authorization of payments comprising:
(1) enabling beneficiaries or payees of payments and transfers to seek or initiate payment and transfer of value from the payer or transferor;
(2) identifying different types of accounts or value-holding units of the payer or transferor based on the registered telephone numbers of the payer or transferor; and
(3) using push notifications to seek and obtain authorization from the payer or transferor using any of:
(a) identity of the device and internet connection, without necessarily relying on or going through telephone network operator; or
(b) relying on the telephone network operator's Unstructured Supplementary Service Data (USSD).

2. The process according to claim 1, additionally comprising:
(i) replacing of physical points of sales terminals by personal telephone handsets, tablets and similar personal electronic devices, which are used for transactions;
(ii) approving remotely the electronic payments and/or transactions, from wherever the account holder may be located;
(iii) being unnecessary to enter the Personal identification number (PIN) for transaction authentication, except on the subscriber's own device or environment; and
(iv) using the telephone number as a common identifier for all accounts, cards, etc., telephone number which replaces card and account details at all acceptance locations and channels.
